# EUROPEAN PATENT SPECIFICATION

(11) **EP 2 156 065 B1**
(45) Date of publication and mention of the grant of the patent: **12.09.2012**
(21) Application number: 08760993.9
(22) Date of filing: 13.06.2008
(51) Int. Cl.: F16C 33/78, F16J 15/32, F16J 15/34, G01P 3/44

(54) **A BEARING UNIT WITH AN ENCODER**
LAGERUNGSEINHEIT MIT EINEM KODIERGERÄT
UNITE DE PALIER AVEC UN CODEUR

(30) Priority: 15.06.2007 IT TO20070429
(43) Date of publication of application: 24.02.2010
(73) Proprietor: Aktiebolaget SKF, 415 50 Göteborg (SE)
(72) Inventor: FOTI, Claudio, I-10046 Poirino Torino (IT)
(74) Representative: Fioravanti, Corrado
(86) International application number: PCT/EP2008/057464
(87) International publication number: WO 2008/152128

(56) References cited:
- EP-A- 0 745 857
- EP-A- 1 245 874
- EP-A- 1 452 871
- US-A- 2 031 571
- US-A1- 2006 289 620

## Description

This invention relates to a bearing unit provided with an encoder for detecting relative rotation between the rings of the bearing.

Many bearing units are fitted with sealing devices mounted on the sides of the bearing unit to seal the gap between the bearing rings. These sealing devices usually include a reinforcing metal insert, of annular discoidal shape, on which there is overmoulded or vulcanized a coating of rubber or soft elastomeric material which forms two opposing peripheral sealing portions: a first peripheral portion snap-fitted with slight force into an annular groove formed in the stationary ring of the bearing, to form a static seal on this ring, and a second peripheral portion to provide a sealing action on the rotatable ring of the bearing. A distinction is made between so-called *l*ow-*fri*c*tion seals,* which do not contact the rotatable ring, and *contact seals,* which have one or more dynamic sealing lips designed to slide against the rotatable ring of the bearing.

International patent application WO 2006/087339 discloses a sealing device for a bearing with an integrated encoder. The device has to be inserted sideways into a bearing unit to seal the gap between the stationary ring and the rotatable ring. The device contains an annular discoidal reinforcing insert and a coating of rubber or relatively soft elastomeric material overmoulded or vulcanized onto the reinforcing insert. The coating forms two opposing peripheral sealing portions designed to exert a static sealing action respectively on the rotatable ring and a dynamic sealing action on the stationary ring. The reinforcing insert includes a matrix of plastic material filled with a magnetized or magnetizable powder, particularly ferrite, such as to form, in predetermined angular zones or fields, a succession of alternating and/or separated north/south poles, in order to perform the function of an encoder.

Other designs are also known, in which an encoder made of a magnetized plastoferrite is overmoulded or bonded to a metal supporting shield fixed to the rotatable ring of the bearing. See, for example, U.S. Patent No. 6,776,420. When in use, as is known, the encoder faces a fixed sensor which detects rotational data, typically the relative speed of rotation between the inner and outer rings of the bearing. This configuration requires machining into one of the bearing rings an axial cylindrical wall into which or against which the metal shield is fixed, this shield also acting in some cases as a rotating interface surface in sliding contact with a rubber lip of a sealing device fixed to the stationary ring of the bearing.

US-A-2 031 571 discloses a bearing unit, comprising a bearing with a stationary ring and at least one rotatable ring with at least one circular groove on at least one of its sides, and a sealing member rotationally integral with the rotatable ring, wherein the sealing member integrally forms fitting means so sized as to fit into the groove and lock the sealing member to the rotatable ring. EP-A-0 745 857 discloses a magnetic polarized plastoferrite ring usable as an encoder in a rolling bearing.

It is an object of the present invention to provide a bearing unit provided with an encoder and designed in particular to work in environments, such as relatively dry environments, which do not require the bearing to be hermetically sealed, using, without their having to be modified, bearings with "standard" type rings which have a groove in their side for fixing a traditional annular sealing shield. It is another object of the invention to reduce the costs of producing the encoder and installing it on the bearing unit. It is particularly wished to avoid the operations of vulcanizing rubber onto the encoder or other operations for fixing the encoder to a metal shield which supports it.

These and other objects and advantages, which will be understood more clearly later, are achieved by the invention by means of a bearing unit having the features set forth in the appended claims.

A few preferred but not limiting embodiments of the present invention will now be described with reference to the attached drawings, in which:
- figure 1 is a schematic view in axial section of a bearing unit and encoder in a first embodiment of the invention; and
- figure 2 is a partial schematic view in axial section of a bearing unit and encoder in a second embodiment of the invention.

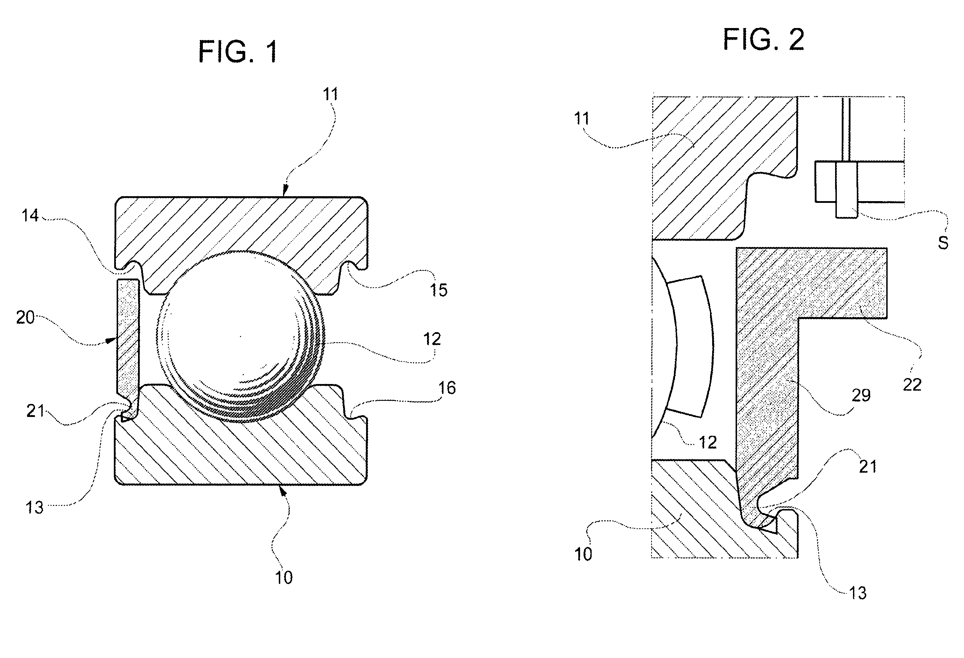

Referring to figure 1, a conventional ball bearing has a rotatable ring 10, a stationary ring 11 and a set of rolling elements, in this example balls 12, interposed between the rings 10 and 11.

In the example illustrated in figure 1, on each of the two opposite sides of the bearing a respective circumferential groove 13-16 is formed in each ring. These grooves are exploited conventionally for accommodating or fixing a sealing device, which in the case of the present invention is absent.

An encoder 20, made entirely of plastoferrite, is of essentially annular discoidal shape with a peripheral fitting edge 21 shaped to enable it to be attached rapidly, by snap action for example, in one of the grooves 13-16 of the bearing. The fitting edge 21 of the encoder will be either the inner or outer edge, depending on whether the rotatable ring of the bearing is the inner or outer ring.

In the example illustrated in figure 1, the peripheral edge 21, shown in the undeformed or free condition, is shaped in such a way that it can be force-fitted into the circumferential groove 13 of the rotatable ring and therefore lock the encoder to this ring. In the preferred embodiment, the edge 21 is curved and becomes thinner and has a substantially hook-like cross section with its concavity facing away from the bearing which facilitates its insertion into the groove and opposes its removal.

The radial extension of the encoder is preferably such as to cross the gap between the rings and reach the stationary ring, which thus acts as a stop surface for the edge of the encoder opposite to the fitting edge 21. Due to this arrangement, the encoder can be inserted into the bearing by a simple movement of axial thrust until it engages and hence locks the edge 21 into the groove 13 of the rotatable ring. Coverage of the gap may be desirable to prevent the fine dust and other contaminants from entering into the bearing. However, since the encoder has no specifical sealing functions, the deformation of the peripheral edge does not necessarily have to copy the shape of the groove exactly. In particular, the fitting edge can be shaped as a continuous edge, i.e. extending circumferentially continuously around the encoder, or may be a plurality of discrete tabs.

In the example shown in figure 2, the encoder 20 has an L-shaped cross section with a cylindrical portion 22 that is adapted to radially face an associated magnetic/electrical sensor or transducer S. By contrast, the example shown in figure 1 refers to an annular discoidal encoder designed for facing a sensor (not shown) for a radially oriented direction of reading.

Before or after installing the encoder on the bearing ring, the encoder is polarized magnetically to form, in predetermined angular zones or fields, a succession of suitably alternating and/or separated north/south poles. The encoder is given its magnetic properties by an apparatus which permanently magnetizes the ferrite in predetermined zones with the desired polar orientation.

Once the encoder is fitted to the bearing unit, the encoder may be operationally faced in a radial or axial direction towards an associated magnetic/electrical sensor or transducer mounted on a stationary part. As the rotatable ring turns, the magnetic flux sensed by the transducer varies as the magnetized zones of the encoder pass in front of the transducer, which produces electrical pulses representing rotation data (such as angular position, speed, acceleration, etc.) of the rotatable ring. The electrical signals made available by the transducer are sent to an electronic processor which processes them to generate information about the movement of the rotatable ring.

It will be understood that the invention is not limited to the embodiments described and illustrated here, which are to be regarded as examples of the unit; instead, the invention is susceptible of modifications relating to the shapes, dimensions and arrangements of parts, constructional details and materials used. For example, the stationary ring needs not have the grooves depicted in figure 1.

## Claims

1. A bearing unit with an encoder, comprising:
a bearing with a stationary ring (11) and at least one rotatable ring (10) with at least one circular groove (13) on at least one of its sides,
an encoder made of plastoferrite (20) rotationally integral with the rotatable ring, **characterized in that** the encoder (20) integrally forms fitting means (21) so sized as to fit into the groove (13) and lock the encoder to the rotatable ring (10).

2. A bearing unit according to Claim 1, **characterized in that** the fitting means comprise a peripheral fitting edge (21) so shaped as to be quickly snap-fitted into the groove (13).

3. A bearing unit according to Claim 1 or 2, **characterized in that** the fitting edge (21) is curved and becomes thinner and has a hook-like cross section with its concavity facing away from the bearing.

4. A bearing unit according to Claim 1, **characterized in that** the encoder extends radially across the gap between the stationary ring (11) and the rotatable ring (10).

5. A bearing unit according to Claim 2, **characterized in that** the peripheral fitting edge (21) extends circumferentially continuously around the encoder.

6. A bearing unit according to Claim 1, **characterized in that** the fitting means (21) comprise a plurality of discrete elastic tabs that can be locked elastically or by snap action in the groove (13).

7. A bearing unit according to Claim 1, **characterized in that** the encoder has a substantially annular discoidal portion capable of being faced axially towards an associated magnetic/electrical sensor or transducer (S).

8. A bearing unit according to Claim 1, **characterized in that** the encoder has a cylindrical portion (22) capable of being faced radially to an associated magnetic/electrical sensor or transducer (S).

9. A bearing unit according to Claim 1, **characterized in that** the bearing is a standard rolling-contact bearing in which the groove (13) is of the type designed to at least partly accommodate a sealing device.

## Patentansprüche

1. Lagereinheit mit einem Drehgeber, die Folgendes umfasst:
ein Lager mit einem stationären Ring (11) und wenigstens einem drehbaren Ring (10), wobei auf wenigstens einer seiner Seiten eine kreisförmige Nut (13) vorhanden ist,
einen Drehgeber, der aus Plastoferrit (20) hergestellt ist und in den drehbaren Ring rotatorisch integriert ist,
**dadurch gekennzeichnet, dass** mit dem Drehgeber (20) Passmittel (21) einteilig ausgebildet sind, die bemessen sind, damit sie in die Nut (13) passen und den Drehgeber an dem drehbaren Ring (10) verriegeln.

2. Lagereinheit nach Anspruch 1, **dadurch gekennzeichnet, dass** die Passmittel eine Umfangspasskante (21) aufweisen, die so geformt ist, dass sie in die Nut (13) schnell eingerastet werden kann.

3. Lagereinheit nach Anspruch 1 oder 2, **dadurch gekennzeichnet, dass** die Passkante (21) gekrümmt ist und dünner wird und einen hakenartigen Querschnitt besitzt, wobei ihre Konkavität von dem Lager wegweist.

4. Lagereinheit nach Anspruch 1, **dadurch gekennzeichnet, dass** sich der Drehgeber radial über den Spalt zwischen dem stationären Ring (11) und dem drehbaren Ring (10) erstreckt.

5. Lagereinheit nach Anspruch 2, **dadurch gekennzeichnet, dass** sich die Umfangspasskante (21) in Umfangsrichtung ununterbrochen um den Drehgeber erstreckt.

6. Lagereinheit nach Anspruch 1, **dadurch gekennzeichnet, dass** die Passmittel (21) mehrere diskrete elastische Laschen aufweisen, die in der Nut (13) elastisch oder durch Einrastwirkung verriegelt werden können.

7. Lagereinheit nach Anspruch 1, **dadurch gekennzeichnet, dass** der Drehgeber einen im Wesentlichen ringförmigen scheibenförmigen Abschnitt aufweist, der axial auf einen zugeordneten magnetischen/elektrischen Sensor oder Wandler (S) gerichtet werden kann.

8. Lagereinheit nach Anspruch 1, **dadurch gekennzeichnet, dass** der Drehgeber einen zylindrischen Abschnitt (22) besitzt, der radial auf einen zugeordneten magnetischen/elektrischen Sensor oder Wandler (S) gerichtet werden kann.

9. Lagereinheit nach Anspruch 1, **dadurch gekennzeichnet, dass** das Lager ein Standard-Rollkontaktlager ist, in dem die Nut (13) von dem Typ ist, der entworfen ist, um eine Dichtungsvorrichtung wenigstens teilweise aufzunehmen.

## Revendications

1. Unité de palier à codeur, comprenant:
- un palier avec un anneau stationnaire (11) et au moins un anneau rotatif (10) comprenant au moins une gorge circulaire (13) sur au moins un de ses côtés ;
- un codeur fait de plastoferrite (20) faisant partie intégrale en rotation de l'anneau rotatif ;
**Caractérisée en ce que** le codeur (20) forme intégralement un moyen d'adaptation (21) possédant une taille lui permettant d'être inséré dans la gorge (13) et de verrouiller le codeur à l'anneau rotatif (10).

2. Unité de palier selon la revendication 1, **caractérisée en ce que** le moyen d'adaptation comprend un bord d'adaptation périphérique (21) possédant une forme lui permettant d'être rapidement encliqueté dans la gorge (13).

3. Unité de palier selon la revendication 1 ou la revendication 2, **caractérisée en ce que** le bord d'adaptation (21) est courbe et devient plus fin, et possède une section transversale en forme de crochet dont la concavité est orientée à l'opposé du palier.

4. Unité de palier selon la revendication 1, **caractérisée en ce que** le codeur s'étend radialement en travers du jour entre l'anneau stationnaire (11) et l'anneau rotatif (10).

5. Unité de palier selon la revendication 2, **caractérisée en ce que** le bord d'adaptation périphérique (21) s'étend circonférentiellement et de façon continue autour du codeur.

6. Unité de palier selon la revendication 1, **caractérisée en ce que** le bord d'adaptation (21) comprend plusieurs languettes élastiques discrètes qui peuvent se verrouiller élastiquement ou par encliquetage dans la gorge (13).

7. Unité de palier selon la revendication 1, **caractérisée en ce que** le codeur comprend une partie discoïde essentiellement annulaire pouvant être orientée axialement vers un capteur magnétique/électrique ou un transducteur (S) associé.

8. Unité de palier selon la revendication 1, **caractérisée en ce que** le codeur comprend une partie cylindrique (22) pouvant être orientée radialement vers un capteur magnétique/électrique ou un transducteur (S) associé.

9. Unité de palier selon la revendication 1, **caractérisée en ce que** le palier est un palier à contact par roulement standard dans lequel la gorge (13) est du type conçu pour recevoir au moins partiellement un dispositif d'étanchéité.
